Europäisches Patentamt

European Patent Office

Office européen des brevets

(19)

(11) **EP 0 832 377 B1**

(12) **FASCICULE DE BREVET EUROPEEN**

(45) Date de publication et mention
de la délivrance du brevet:
**07.04.1999 Bulletin 1999/14**

(21) Numéro de dépôt: **96920887.5**

(22) Date de dépôt: **03.06.1996**

(51) Int Cl.⁶: **F16H 37/04**, F16H 3/66

(86) Numéro de dépôt international:
**PCT/FR96/00830**

(87) Numéro de publication internationale:
**WO 96/41976 (27.12.1996 Gazette 1996/56)**

(54) **ENSEMBLE CINEMATIQUE DE BOITE DE VITESSES**

KINEMATISCHE GETRIEBEANORDNUNG

GEARBOX DRIVE LINE

(84) Etats contractants désignés:
**DE GB**

(30) Priorité: **13.06.1995 FR 9506956**

(43) Date de publication de la demande:
**01.04.1998 Bulletin 1998/14**

(73) Titulaire: **SOCIETE D'EQUIPEMENTS,
SYSTEMES ET MECANIQUES**
**95310 Saint Ouen l'Aumone (FR)**

(72) Inventeur: **MICHEL, Robert**
**F-95540 Mery-sur-Oise (FR)**

(74) Mandataire: **Poidatz, Emmanuel**
**Conseil en Propriété Industrielle,**
**96, Boulevard Malesherbes**
**75017 Paris (FR)**

(56) Documents cités:
DE-A- 1 906 030          DE-B- 1 031 647
US-A- 4 446 758          US-A- 4 531 428

- **DATABASE WPI Section PQ, Week 8444 Derwent**
**Publications Ltd., London, GB; Class Q64, AN**
**84-274503 XP002011590 & SU,A,1 010 355**
**(AGRIC) , 7 Avril 1983**

**Description**

La présente invention concerne un ensemble cinématique de boîte de vitesses de type à trains épicycles (également appelés trains épicycliques, épicycloïdaux ou planétaires) utilisable notamment dans des transmissions de propulsion de véhicules, par exemple pour l'entraînement des roues motrices d'un véhicule.

Les trains épicycles sont utilisés depuis longtemps dans les transmissions automobiles, notamment dans les boîtes de vitesses automatiques et dans les surmultiplicateurs ou "overdrive". D'une façon générale, un train épicycle simple comprend un pignon central ou pignon planétaire, une couronne à denture intérieure et un jeu de pignons satellites disposés entre la couronne et le pignon planétaire et liés entre eux par un bâti ou porte-satellites. En fonctionnement, le pignon planétaire, la couronne et le bâti sont indépendamment associés à un élément tournant moteur, à un élément tournant récepteur et à un élément servant de point d'appui ou de réaction. Cet élément de réaction peut être fixe ou tournant embrayé avec le moteur ou le récepteur (prise directe). Selon le choix de la combinaison des associations on obtient une démultiplication, une surmultiplication ou une marche arrière, toutes trois fonctions du rapport du train défini par le rapport du nombre de dents de la couronne sur le nombre de dents du planétaire. Le changement de rapport des vitesses est alors obtenu par une modification de la combinaison des associations. En pratique, les associations temporaires avec les éléments du train sont réalisées à l'aide d'organes de friction, soit à l'aide d'embrayages pour associer des éléments tournants, soit à l'aide de freins pour obtenir le blocage des éléments choisis pour assurer la réaction. Enfin la solidarisation temporaire de deux des éléments constitutifs du train entraîne un blocage de celui-ci et la prise directe entre l'élément moteur et l'élément récepteur.

Les boîtes de vitesses de véhicule ont pour fonction d'adapter le couple délivré par le moteur aux conditions exigées par la charge du véhicule et par le profil et la nature de la piste de roulement du véhicule. En particulier la boîte réalise une multiplication du couple permettant le démarrage notamment en terrain difficile. Quand le véhicule gagne de la vitesse, la démultiplication de couple diminue jusqu'à la prise directe et les vitesses surmultipliées. La relation des rapports de vitesses successifs constitue l'étagement de la boîte de vitesses.

A défaut de contrainte particulière d'utilisation, l'étagement idéal d'une boîte de vitesses est selon une progression géométrique. Un tel étagement permet i) d'approcher au plus près l'hyperbole d'équipuissance (P = C x w), ii) de réaliser les changements de rapports de vitesse dans les meilleures conditions pour la mobilité en utilisant toujours la même plage de vitesse du moteur (la plage offrant la puissance maximale), iii) d'obtenir un pas relatif de deux rapports successifs constant (progression géométrique).

Une autre caractéristique importante d'une boîte de vitesses est son "ouverture" définie par le rapport de la vitesse la moins démultipliée sur la vitesse la plus démultipliée. Cette ouverture permet de multiplier le couple (au démarrage) ou la vitesse maximale (en roulage) et de disposer une plage plus ou moins large sur l'hyperbole de puissance correspondant à la puissance moteur. Pour des véhicules tout terrain utilisant des boîtes de vitesses à trains épicycles, une ouverture en couple d'environ 12 est nécessaire, ouverture qui peut être produite par une ouverture mécanique de 6 dans le cas d'utilisation d'un convertisseur de couple. En particulier le document DE-B-1.031.647 montre un ensemble cinématique de boîte de vitesses comportant quatre trains épicycles à rapport de train identique égal à 1,618 pour obtenir quatre vitesses en Entrée/Sortie en progression géométrique avec une ouverture mécanique proche de 7, l'ensemble mécanique étant associé à un convertisseur de couple.

Pour des raisons de coût, d'encombrement et de rendement, il peut s'avérer intéressant d'éviter l'utilisation d'un convertisseur de couple. Dans ce cas, l'organisation d'une chaîne cinématique pour boîte de vitesses de véhicule à grande ouverture (>12) avec un pas limité (<1,5) pour utiliser le moteur dans sa plage maximale conduit à un grand nombre de rapports. La chaîne cinématique devient très complexe et l'étagement géométrique quasiment impossible à obtenir avec l'augmentation du nombre de trains épicycles.

L'invention a pour but de proposer un ensemble cinématique de boîte de vitesses bien adapté pour être utilisé dans des boîtes de vitesses à grande ouverture, notamment des boîtes à étagement en progression géométrique, et de réalisation technique relativement aisée.

Plus particulièrement, l'invention propose un ensemble cinématique pour boîte de vitesses comportant un groupe de quatre trains épicycles à rapports de train identiques K et associés de façon à obtenir au moins trois rapports de vitesses en Entrée/Sortie du groupe étagés sensiblement en progression géométrique, caractérisé en ce que le rapport K des quatre trains épicycles est choisi à une valeur approchée de la solution réelle de l'équation $K^3-(K+1)^2=0$, soit à une valeur approchée de K théorique= Kt=2,148, l'ensemble cinématique comportant en amont du groupe de trains de rapport K un ensemble surmultiplicateur débrayable à train épicycle présentant un coefficient de surmultiplication CS approchant $\sqrt{K}$, l'ensemble surmultiplicateur étant associé au groupe de trains de façon à obtenir six ou huit rapports de vitesses en Entrée/Sortie sensiblement étagés en progression géométrique de pas $\sqrt{K}$, soit d'un pas d'une valeur approchée de 1,466. L'ensemble combiné "groupe et surmultiplicateur" selon l'invention ainsi défini dans sa configuration à 8 vitesses présente une large ouverture de 14,5 avec un pas de l'ordre 1,45. Un tel ensemble combiné est particulièrement bien adapté à la propulsion de véhicules tout terrain et de véhicules lourds à moteurs de forte puissance.

Par ailleurs la fabrication de trains épicycles à rapport inférieur à 2 s'avère difficile compte tenu de la relative petite taille des diamètres des pignons satellites. Ainsi avec l'utilisation de trains identiques de rapport voisin de 2,15, la structure de l'ensemble cinématique de boîte de vitesses selon l'invention est de construction relativement aisée et facilitée par la standardisation des trains épicycles du groupe. Ceci permet d'utiliser les mêmes outils de taillage et parfois même des éléments de l'ensemble totalement identiques avec pour conséquence des coûts de fabrication diminués. Un autre effet intéressant est l'homogénéité dans les dimensions diamétrales de l'ensemble cinématique compte tenu du fait que le concepteur de cet ensemble a la possibilité d'agir sur la dimension de l'épaisseur axiale des roues d'engrenage ou sur le nombre de satellites pour ajuster le dimensionnement de l'ensemble cinématique aux couples. Avantageusement les quatre trains du groupe présentent des modules identiques notamment choisis à 90/42 dents ou à 82/38 dents, soit des rapports de trains pratiques respectivement égaux à $Kp=2{,}143$ et $Kp'=2{,}158$.

On notera également que le sous-ensemble limité au groupe des quatre trains épicycles présente dans sa configuration à 4 vitesses en progression géométrique une ouverture déjà importante de 10 avec un pas de 2,15. Ce sous-ensemble est bien adapté pour être utilisé directement comme boîte de vitesses avec des moteurs électriques ou avec des moteurs thermiques fixes. De plus cet ensemble peut servir de base à des ensembles cinématiques encore plus performants destinés aux véhicules à moteurs thermiques.

Selon une caractéristiques additionnelle avantageuse de l'invention, les cinq trains épicycles de l'ensemble combiné présentent des rapports de train identiques. Ceci permet d'utiliser des trains épicycles de même module, par exemple 90/42 et de parfaire la standardisation des éléments constitutifs de l'ensemble combiné.

Toujours selon une caractéristique additionnelle avantageuse, l'ensemble cinématique peut comporter en entrée un ensemble inverseur débrayable à train épicycle.

Toujours selon une autre caractéristique additionnelle, l'organe d'entrée se présente principalement sous la forme d'un arbre traversant ledit ensemble cinématique et monté coaxialement par rapport aux trains épicycles. En effet le rapport des trains incorporés dans l'ensemble cinématique selon l'invention légèrement supérieur à 2 autorise l'utilisation de pignons planétaires d'un diamètre suffisant pour présenter un arbre creux et permettre à l'arbre d'entrée de traverser l'ensemble cinématique de boîte de vitesses de part en part, facilitant ainsi le montage de la boîte et/ou de prises de force.

Selon un mode de réalisation particulier d'un ensemble cinématique selon l'invention, le groupe de trains épicycles comporte un train d'entrée B, un train de sortie C et deux trains intermédiaires A et D, l'arbre d'entrée du groupe étant lié en rotation au planétaire du train d'entrée B, l'arbre de sortie du groupe étant lié en rotation au bâti (ou porte-satellites) du train de sortie C, le planétaire du train C étant lié en rotation au planétaire du train D, au bâti (ou porte-satellites) du train B et à la couronne du train A, la couronne freinée du train C étant liée en rotation au bâti (ou porte-satellites) du train D, à la couronne du train B et au bâti (ou porte-satellites) du train A, le planétaire du train A et la couronne du train D étant individuellement freinés. Avantageusement, le groupe de trains comporte au moins un embrayage entre le planétaire du train A et le planétaire du train B pour obtenir la prise directe en Entrée/Sortie du groupe.

D'autres avantages et caractéristiques de l'invention apparaîtront dans la description ci-après qui se réfère aux dessins joints dans lesquels:

- la figure 1 montre une représentation schématique en coupe axiale d'un mode de réalisation d'un ensemble cinématique de boîte de vitesses selon l'invention comportant un groupe de trains, un ensemble surmultiplicateur et un ensemble inverseur; et
- la figure 2 montre une représentation schématique en coupe axiale d'un autre mode de réalisation d'un ensemble cinématique de boîte de vitesses selon l'invention comportant un groupe de trains et un ensemble surmultiplicateur avec fonction d'inversion intégrée.

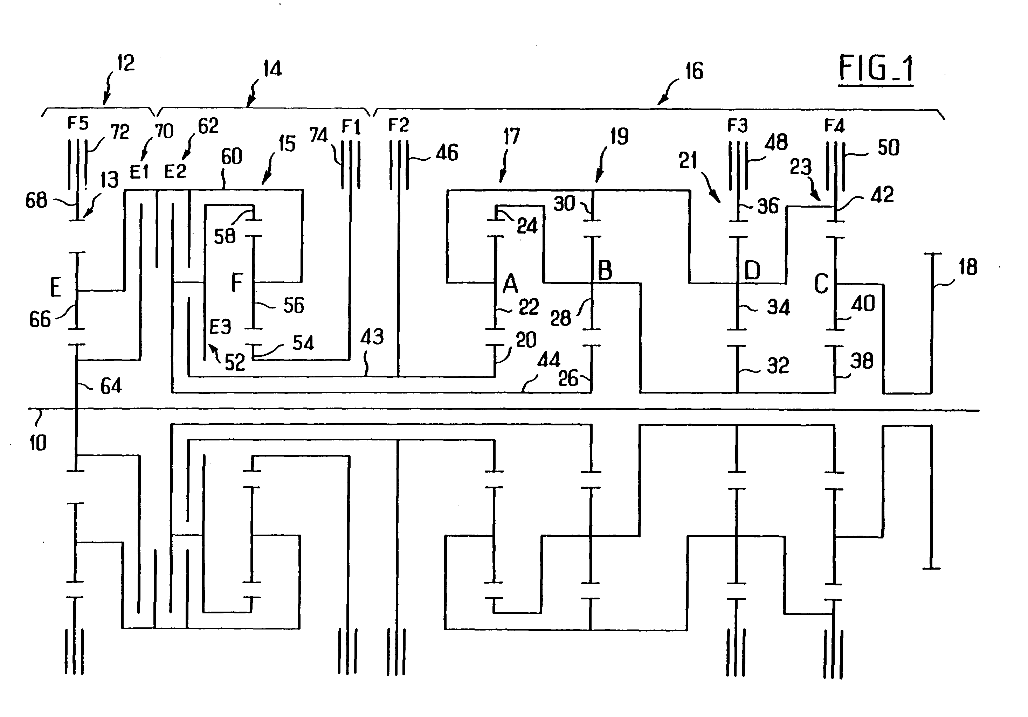

Si l'on considère la figure 1, l'ensemble cinématique selon l'invention présenté à titre d'exemple non limitatif comporte un arbre d'entrée 10 traversant l'ensemble cinématique, un ensemble inverseur 12 à train épicycle 13, un ensemble surmultiplicateur 14 à train épicycle 15 un groupe 16 de quatre trains épicycles A-B-D-C et un organe de sortie 18. Par convention l'ensemble cinématique complet selon l'invention ici décrit est également appelé ensemble combiné 12+14+16.

Le groupe 16 comporte quatre trains épicycles simples classiques, avec pour chacun un pignon central ou planétaire (ci-après le planétaire), une couronne à denture intérieure et un jeu de pignons satellites (par exemple 4 à 6 pignons satellites) portés par un porte-satellites ou bâti: soit pour le train A 17 le planétaire 20, le bâti 22 et la couronne 24, pour le train B 19 le planétaire 26, le bâti 28 et la couronne 30, pour le trainD 21 le planétaire 32, le bâti 34 et la couronne 36 et pour le train C 23 le planétaire 38, le bâti 40 et la couronne 42. L'entrée du groupe 16 est réalisée par l'arbre creux 44 lié en rotation au planétaire 26 du train B (train d'entrée), tandis que la sortie 18 du groupe 16 (tenant lieu également de sortie de l'ensemble cinématique complet) est réalisée par un pignon d'entraînement 18 lié en rotation au bâti 40 du train C (train de sortie). Le groupe 16 comporte trois freins, le frein F2 46 associé au planétaire 20 du train A, le frein F3 48 associé à la couronne 36 du train D et le frein F4 50 associé à la couronne 42 du train D. Enfin, le groupe 16 comporte un embrayage, l'embrayage E3 52 disposé entre les arbres 43 et 44 respectivement liés en rotation aux planétaires 20 et 26 des trains A et B. Pour des raisons de compacité de montage, l'embrayage 52 est imbriqué dans l'ensemble surmultiplicateur 14, toutefois cette disposition n'est ni impérative ni exhaustive.

Chaque train épicycle fournissant 3 degrés de liberté, on obtient un total de 12 auquel il faut déduire 4 relations linéaires sur les vitesses (formules de Willis). En conséquence la définition d'une vitesse de sortie (vitesse angulaire du bâti 40 du train C) à partir d'une vitesse d'entrée du groupe 16 déterminée (la vitesse angulaire du planétaire 26 du train B) nécessite 6 liaisons en rotation internes permanentes (12-4-6-1=1). Ces six liaisons sont constituées par les deux groupements suivants:

    i) Couronne 24 du train A liée en rotation avec le bâti 28 du train B lié en rotation avec le planétaire 32 du train D lié en rotation avec le planétaire 38 du train C;
    ii) Bâti 22 du train A lié en rotation avec la couronne 30 du train B liée en rotation avec le bâti 34 du train D lié en rotation avec la couronne 42 du train C.

Selon une caractéristique importante de l'invention les quatre trains A-B-D-C ont des rapports de train identiques de valeur unique K (Ka=Kb=Kd=Kc=K), le rapport de train Ki étant défini comme égal au Nombre de dents couronne/Nombre de dents du pignon planétaire. Comme expliqué en détails ci-après, K est choisi à une valeur approchée de Kt=2,148 pour obtenir des rapports de vitesses à étagement en progression géométrique sensiblement de pas K pour le groupe de trains 16.

Dans le mode de réalisation ici décrit à titre d'exemple non limitatif, les trains A-B-D-C sont identiques et de même module 90/42, ce qui donne un rapport K=Kp=K(90/42)=2,143.

L'ensemble surmultiplicateur 14 disposé en amont du groupe 16 est principalement constitué d'un train épicycle F 15 de même rapport de train K que les trains A-B-D-C Dans le mode de réalisation ici décrit à titre d'exemple non limitatif le train F présente le même module 90/42 et le rapport Kf du train F s'écrit Kf=Kp=2,143. Dans la pratique les cinq trains 15, 17, 19, 21 et 23 sont identiques ce qui permet une réduction importante des coûts de fabrication du fait de la standardisation des composants et facilite l'agencement spatial général de l'ensemble cinématique selon l'invention. Le train F 15 comporte un planétaire 54 associé à un frein F1 74, un bâti 56 lié en rotation à un manchon tournant 60 et une couronne 58 liée en rotation à l'arbre d'entrée 44 du groupe 16 (lié en rotation au planétaire 26 du train B), un embrayage E2 62 étant disposé entre la couronne 58 et le manchon tournant 60.

L'ensemble cinématique est complété par un ensemble inverseur débrayable 12 comportant un train épicycle E 13 à double satellites (pour obtenir l'inversion de la rotation) et de rapport de train Ke voisin de 2 (pour obtenir en sortie du train E 13 des vitesses avant et arrière sensiblement égales). Le train inverseur 13 comporte un planétaire 64 lié en rotation à l'arbre d'entrée 10, un bâti 66 lié en rotation avec le manchon tournant 60 et une couronne 68 associée à un frein F5 72, un embrayage EI 70 étant disposé entre le planétaire 64 et le bâti 66 du train E 72.

Les freins et embrayages utilisés dans l'ensemble cinématique selon l'invention et qui peuvent être du type multidisque, sont commandés par des servocommandes électriques et/ou hydrauliques, éventuellement sous le contrôle d'un module électronique.

Le fonctionnement de l'ensemble cinématique selon l'invention (ensemble combiné 12+14+16) est décrit ci-après en référence au tableau des commutations ou TABLEAU I illustrant les combinaisons opératoires des divers organes de friction pour obtenir 8 vitesses AV et 6 vitesses AR (l'astérisque * indiquant la mise en action de l'organe de friction considérée), le point mort étant obtenu par relâchement de tous les organes de friction.

TABLEAU I

|      | E1 | E2 | E3 | F1 | F2 | F3 | F4 | F5 |
|------|----|----|----|----|----|----|----|----|
| 1 AV | *  | *  |    |    |    |    | *  |    |
| 2 AV | *  |    |    | *  |    |    | *  |    |
| 3 AV | *  | *  |    |    |    | *  |    |    |
| 4 AV | *  |    |    | *  |    | *  |    |    |
| 5 AV | *  | *  |    |    | *  |    |    |    |
| 6 AV | *  |    |    | *  | *  |    |    |    |
| 7 AV | *  | *  | *  |    |    |    |    |    |
| 8 AV | *  |    | *  | *  |    |    |    |    |

TABLEAU I   (suite)

|       | E1 | E2 | E3 | F1 | F2 | F3 | F4 | F5 |
|-------|----|----|----|----|----|----|----|----|
| 1 AR  |    | *  |    |    |    |    | *  | *  |
| 2 AR  |    |    |    | *  |    |    | *  | *  |
| 3 AR  |    | *  |    |    |    | *  |    | *  |
| 4 AR  |    |    |    | *  |    | *  |    | *  |
| 5 AR  |    | *  |    |    | *  |    |    | *  |
| 6 AR  |    |    |    | *  | *  |    |    | *  |

Si l'on considère la figure 1 avec le Tableau I, on peut remarquer en ce qui concerne l'ensemble inverseur 12 que le bâti 66 du train E 13 est rendu solidaire de l'arbre d'entrée 10 lorsque l'embrayage E1 70 est actionné (E1=1) pour obtenir les vitesses Avant (AV) et tourne en sens inverse lorsque le frein F5 72 est actionné (F5=1) pour obtenir les vitesses Arrières (AR). Le manchon 60 lié en rotation au bâti 66 du train E sert d'entrée (par le bâti 56 du train F) à l'ensemble surmultiplicateur 14. Lorsque le frein F1 74 est actionné et l'embrayage E2 62 ouvert la sortie du train F (la couronne 58 reliée au planétaire 26 du train B, c'est à dire à l'entrée du groupe 16) est surmultipliée. Par contre le manchon 60 se trouve en prise directe avec la sortie du train F 15 lorsque l'embrayage E2 62 est activé et le frein F1 74 désactivé.

Le groupe 16 des trains A-B-D-C permet d'obtenir 3 vitesses démultipliées par mise en action des freins F4 50 (1 AV), F3 48 (3 AV) et F2 46 (5 AV) et une prise directe pour le groupe 16 (7 AV) par mise en action de l'embrayage E3 52. Conjugué à l'ensemble surmultiplicateur 14, le groupe 16 permet d'obtenir sur le pignon de sortie 18 huit vitesses Avant (AV) par l'incrustation de quatre vitesses supplémentaires 2 AV, 4 AV, 6 AV et 8 AV, entre et au-delà des quatre vitesses 1 AV, 3 AV, 5 AV et 7 AV. Les vitesses Arrière (AR) sont produites par les mêmes combinaisons des trains du groupe 16 mais après inversion par le train E 13. Les vitesses Arrière sont au nombre de 8 maximum, mais dans la pratique seules les 6 premières sont utilisées.

Le groupe 16 des trains A-B-D-C présente une propriété remarquable en ce qu'il permet d'obtenir un étagement de vitesses à progression géométrique de pas K en choisissant des trains A, B, D, C à rapport de train identique égal à K. En effet le calcul montre la condition qui réalise la progression géométrique de pas K des quatre vitesses 1 AV, 3 AV, 5 AV et 7 AV n'est possible que pour un rapport de train identique égal à K et vérifiant l'équation $K^3-(K+1)^2=0$. Cette équation admet pour seule solution réelle K=2,1479, ce qui donne une valeur arrondie de K théorique Kt=2,148.

Le train surmultiplicateur 14 de rapport Kf produit un coefficient de surmultiplication CS=(1+Kf)/Kf. Si l'on veut respecter la progression géométrique sur les 8 vitesses AV de l'ensemble combiné 12+14+16 il importe que CS=(1+Kf)/Kf=$\sqrt{K}$ soit Kx(Kf$^2$)-(Kf+1)$^2$=0, équation qui se vérifie pour Kf=K=2,1479.

Dans ces conditions le pas théorique de la nouvelle progression géométrique des 8 vitesses de l'étagement de l'ensemble combiné 12+14+16 est donné par $\sqrt{Kt}$=1,466 avec une ouverture totale de $\sqrt{Kt}$(1+Kt)$^2$=14,52.

Dans la pratique lors de la construction technologique on a choisi des modules identiques 90/42 pour les cinq trains A,B,D,C,F avec un rapport de train K pratique K(90/42)=Kp=2,143 approchant à moins de 1% la valeur de Kt et un pas d'étagement $\sqrt{Kp}$=1,464 (au lieu de $\sqrt{Kt}$=1,466), les deux écarts n'étant pas perceptibles dans la pratique lors du fonctionnement l'ensemble cinématique complet combiné.

Il est à noter que la mise en action du train inverseur 13 par relâchement de l'embrayage El 70 et l'activation du frein F5 permet d'obtenir six (ou huit) vitesses Arrière AR également en progression géométrique.

Ainsi donc l'ensemble cinématique combiné 12+14+16 selon l'invention décrit ci-avant permet d'obtenir 8 vitesses AV en progression géométrique et 8 vitesses arrière en progression géométrique avec 5 trains épicycles simples, 1 train inverseur, 3 embrayages et 5 freins.

Bien évidemment l'invention n'est pas limitée à l'utilisation de trains épicycles de modules 90/42 ou 82/38 mais couvre l'utilisation de trains à rapports identiques dont la valeur approche d'une façon générale Kt soit 2,148. Enfin sans sortir du cadre de l'invention différents arrangements de construction sont possibles notamment dans la disposition des embrayages.

Par ailleurs d'autres variantes de l'ensemble cinématique selon l'invention ont été réalisées à partir du groupe de trains 16 pour obtenir des agencements de vitesses AR différents et portant sur la suppression de l'inverseur 12 et l'aménagement de l'ensemble surmultiplicateur.

En particulier dans la mesure où l'utilisation projetée de l'ensemble cinématique selon l'invention ne nécessite pas un grand nombre de vitesses AR, il est possible de modifier l'ensemble combiné de la figure 1 et d'éliminer l'ensemble inverseur 12.

Dans une première variante (non représentée) le train inverseur 13, l'embrayage El 70 et le train F5 sont éliminés pour réaliser la prise directe entre l'arbre d'entrée 10 et le manchon 60, l'inversion à la sortie 18 du groupe 16 étant obtenue par la mise en action d'un frein F'5 (non représenté) associé à un élément tournant lié en rotation au planétaire 38 du train C. On obtient ainsi selon le tableau des commutations ci-après (TABLEAU II) huit vitesses AV en progression géométrique et deux vitesses AR avec 5 trains épicycles simples, 2 embrayages et 5 freins (après élimination du train inverseur et d'un embrayage).

TABLEAU II

|      | E2 | E3 | F1 | F2 | F3 | F4 | F'5 |
|------|----|----|----|----|----|----|-----|
| 1 AV | *  |    |    |    |    | *  |     |
| 2 AV |    |    | *  |    |    | *  |     |
| 3 AV | *  |    |    |    | *  |    |     |
| 4 AV |    |    | *  |    | *  |    |     |
| 5 AV | *  |    |    | *  |    |    |     |
| 6 AV |    |    | *  | *  |    |    |     |
| 7 AV | *  | *  |    |    |    |    |     |
| 8 AV |    | *  | *  |    |    |    |     |
| 1 AR | *  |    |    |    |    |    | *   |
| 2 AR |    |    | *  |    |    |    | *   |

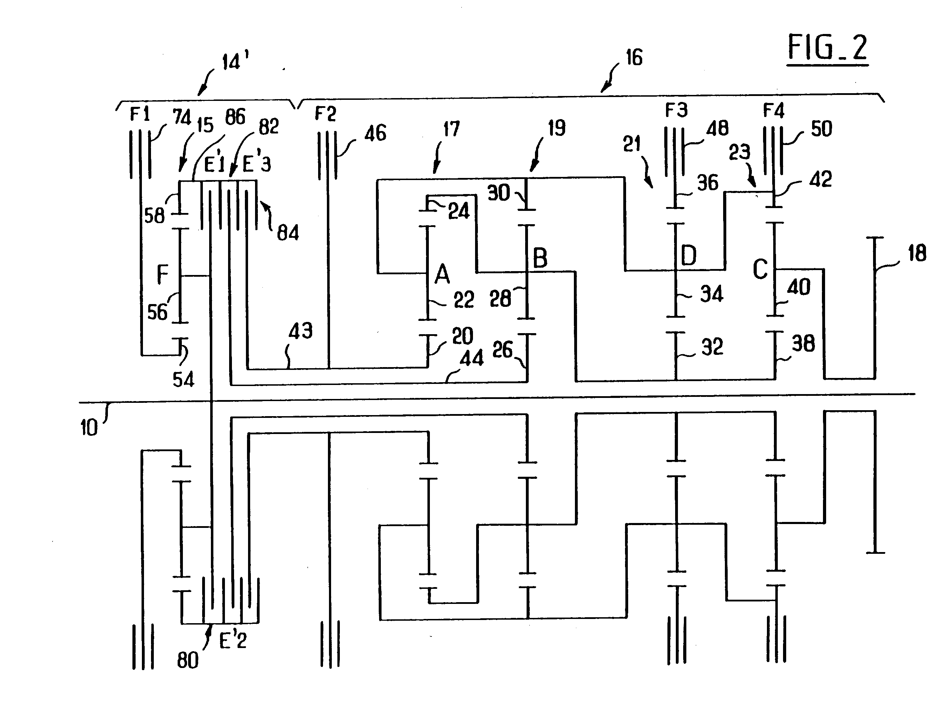

Selon une seconde variante faisant l'objet du mode de réalisation de l'ensemble cinématique selon l'invention illustré à la figure 2, le groupe de trains 16 est associé à un ensemble surmultiplicateur modifié 14' incorporant le train épicycle F 15. Par convention tous les éléments identiques ou techniquement similaires aux éléments déjà décrits en relation à la figure 1 porteront les mêmes références numériques et ne seront pas décrits à nouveau (en particulier le groupe 16 est inchangé et les cinq trains épicycles A-B-D-C et F ont même rapport de train K).

Comme illustré sur la figure 2, le bâti 56 du train F est lié en rotation à l'arbre d'entrée 10 de l'ensemble cinématique, le planétaire 54 du train F étant associé au frein F1 74 tandis que la couronne 58 du train F est liée en rotation avec un manchon 86 porteur de trois embrayages E'1 80, E'2 82 et E'3 84 respectivement associés au bâti 56 du train F, au planétaire 26 du train B et au planétaire 20 du train A.

On obtient ainsi selon le tableau des commutations ci-après (TABLEAU III) huit vitesses AV en progression géométrique et quatre vitesses AR (dont deux très basses vitesses AR particulièrement intéressantes pour une utilisation en situation difficile) avec 5 trains épicycles simples, 3 embrayages et 4 freins (après élimination du train inverseur et d'un frein).

TABLEAU III

|      | E'1 | E'2 | E'3 | F1 | F2 | F3 | F4 |
|------|-----|-----|-----|----|----|----|----|
| 1 AV | *   | *   |     |    |    |    | *  |
| 2 AV |     | *   |     | *  |    |    | *  |
| 3 AV | *   | *   |     |    |    | *  |    |
| 4 AV |     | *   |     | *  |    | *  |    |
| 5 AV | *   | *   |     |    | *  |    |    |
| 6 AV |     | *   |     | *  | *  |    |    |
| 7 AV | *   | *   | *   |    |    |    |    |
| 8 AV |     | *   | *   | *  |    |    |    |
| 1 AR | *   |     | *   |    |    |    | *  |
| 2 AR |     |     | *   | *  |    |    | *  |
| 3 AR | *   |     | *   |    |    | *  |    |
| 4 AR |     |     | *   | *  |    | *  |    |

Il est à noter que l'embrayage E'1 80 sert au débrayage du train surmultiplicateur F 15, que les embrayages E'2 82 et E'3 84 activés ensemble réalisent la prise directe pour le groupe 16 et que l'embrayage E'3 84 activé sans l'embrayage E'2 82 provoque l'entrée du groupe 16 sur le planétaire 20 du train A pour réaliser l'inversion requise permettant d'obtenir les vitesses Arrière AR.

**Revendications**

1. Ensemble cinématique de boîte de vitesses, comportant un groupe (16) de quatre trains épicycles (17, 19, 21, 23) à rapports de train identiques K et associés de façon à obtenir au moins trois rapports de vitesse en Entrée/Sortie du groupe (16) sensiblement étagés en progression géométrique, caractérisé en ce que le rapport K des quatre trains épicycles (17, 19, 21, 23) est choisi à une valeur approchée de la solution réelle de l'équation $K^3-(1+K)^2=0$, soit à une valeur approchée de 2,148, l'ensemble cinématique comportant en amont dudit groupe (16) un ensemble surmultiplicateur (14, 14') à train épicycle F (15) débrayable présentant un coefficient de surmultiplication CS approchant $\sqrt{K}$, ledit ensemble surmultiplicateur (14, 14') étant associé audit groupe (16) de façon à obtenir six ou huit rapports de vitesse en Entrée/Sortie sensiblement étagés en progression géométrique de pas $\sqrt{K}$, soit d'un pas d'une valeur approchée de 1,466.

2. Ensemble cinématique selon la revendication 1, caractérisé en ce que les quatre trains (17, 19, 21, 23) dudit groupe (16) présentent des modules identiques correspondants à une valeur approchée de 2,148 pour les rapports de train, lesdits modules étant notamment choisis à 90/42 ou 82/38.

3. Ensemble cinématique selon l'une des revendications 1 et 2, caractérisé en ce que les cinq trains épicycles (15, 17, 19, 21, 23) du groupe (16) et de l'ensemble surmultiplicateur (14, 14') présentent des rapports de train et des modules identiques.

4. Ensemble cinématique selon l'une des revendications précédentes, caractérisé en ce que ledit groupe comporte un train d'entrée B (19), un train de sortie C (23), et deux trains intermédiaires A (17) et D (19), l'élément d'entrée (44) du groupe (16) étant lié en rotation au planétaire (26) du train d'entrée B, l'élément de sortie (18) du groupe (16) étant lié en rotation au porte-satellites (40) du train de sortie C, le planétaire (38) du train C étant lié en rotation au planétaire (32) du train D, au porte-satellites (28) du train B et à la couronne (24) du train A, la couronne freinée (42) du train C étant liée en rotation au porte-satellites (34) du train D, à la couronne (30) du train B et au porte-satellites (22) du train A, le planétaire (20) du train A et la couronne (36) du train D étant individuellement freinés.

5. Ensemble cinématique selon la revendication 4, caractérisé en ce qu'il comporte au moins un embrayage (52, 82-84) entre le planétaire (20) du train A et le planétaire (26) du train B pour obtenir la prise directe en Entrée/Sortie dudit groupe (16).

6. Ensemble cinématique selon l'une des revendications précédentes, caractérisé en ce qu'il comporte en entrée un ensemble inverseur (12) à train épicycle débrayable (13).

7. Ensemble cinématique selon l'une des revendications 4 à 5 caractérisé en ce qu'il comporte un frein F'5 associé au planétaire (38) du train C (23) de façon à obtenir au moins une vitesse Arrière en sortie (18) de l'ensemble cinématique lorsque le frein F'5 est activé.

8. Ensemble cinématique selon l'une des revendications 4 à 5 caractérisé en ce que le planétaire (54) du train F (15) est lié en rotation à un frein F1 (74), le porte-satellites (56) du train F (15) est lié en rotation à l'organe d'entrée (10) de l'ensemble cinématique et la couronne (58) du train F (15) étant liée en rotation avec trois embrayages E'1 (80), E'2 (82) et E'3 (84) respectivement associés à l'organe d'entrée (10) de l'ensemble cinématique, au planétaire (26) du train C et au planétaire (20) du train A.

9. Ensemble cinématique selon l'une des revendications précédentes, caractérisé en ce que l'organe d'entrée se présente principalement sous la forme d'un arbre (10) traversant ledit ensemble cinématique monté coaxialement par rapport auxdits trains épicycles (13, 15, 17, 19, 21, 23).

# EP 0 832 377 B1

**Patentansprüche**

1. Schaltgetriebeaufbau bestehend aus einem Gruppengetriebe (16) aus vier Umlaufgetrieben (17, 19, 21, 23) mit identischen Verhältniszahlen K, die so miteinander verbunden sind, daß mindestens drei verschiedene Gänge an der An-/Abtriebsseite des Gruppengetriebes (16) entstehen, deren Abstufung im wesentlichen einem geometrischen Verlauf folgt, dadurch gekennzeichnet, daß für Verhältnis K der vier Umlaufgetriebe (17, 19, 21, 23) ein Wert im Bereich der realen Lösung der Gleichung $K^3 - (1+K)^2 = 0$, also ein Näherungswert von 2,148 gewählt wird, wobei der Getriebeaufbau vor diesem Gruppengetriebe (16) eine Übersetzungseinrichtung (14, 14') mit dem auskuppelbaren Umlaufgetriebe F (15) enthält, der einen Übersetzungsfaktor CS im Bereich von $\sqrt{K}$ aufweist, und wobei diese Übersetzungseinrichtung (14, 14') mit dem Gruppengetriebe (16) so verbunden ist, daß man an der An-/Abtriebsseite sechs bzw. acht Gänge erhält, deren Abstufung im wesentlichen einem geometrischen Verlauf entsprechend einem Wert $\sqrt{K}$, also mit einem Näherungswert von 1,466, folgt.

2. Getriebeaufbau nach Anspruch 1, dadurch gekennzeichnet, daß die vier Getriebe (17, 19, 21, 23) des Gruppengetriebes (16) gleiche Module entsprechend einem Näherungswert von 2,148 für die Verhältniszahl der einzelnen Getriebe aufweisen, wobei diese Module insbesondere mit 90/42 oder 82/38 gewählt sind.

3. Getriebeaufbau nach einem der Ansprüche 1 und 2, dadurch gekennzeichnet, daß die fünf Umlaufgetriebe (15, 17, 19, 21, 23) des Gruppengetriebes (16) und der Übersetzungseinrichtung (14, 14') gleiche Verhältniszahlen und gleiche Module aufweisen.

4. Getriebeaufbau nach einem der vorhergehenden Ansprüche, dadurch gekennzeichnet, daß das erwähnte Gruppengetriebe ein antriebsseitiges Getriebe B (19), ein abtriebsseitiges Getriebe C (23) und zwei Zwischengetriebe A (17) und D (19) enthält, wobei das Antriebselement (44) des Gruppengetriebes (16) drehend mit dem Zentralrad (26) des antriebsseitigen Getriebes B, das Abtriebselement (18) des Gruppengetriebes (16) drehend mit dem Planetenradträger (40) des abtriebsseitigen Getriebes C, das Zentralrad (38) des Getriebes C drehend mit dem Zentralrad (32) des Getriebes D, mit dem Planetenradträger (28) des Getriebes B und mit dem Zahnkranz (24) des Getriebes A, der gebremste Zahnkranz (42) des Getriebes C drehend mit dem Planetenradträger (34) des Getriebes D, mit dem Zahnkranz (30) des Getriebes B und dem Planetenradträger (22) des Getriebes A verbunden sind, und das Zentralrad (20) von Getriebe A und der Zahnkranz (36) von Getriebe D einzeln gebremst werden.

5. Getriebeaufbau nach Anspruch 4, dadurch gekennzeichnet, daß er mindestens eine Kupplung (52, 82-84) zwischen dem Zentralrad (20) des Getriebes A und dem Zentralrad (26) des Getriebes B für den Erhalt eines direkten Gangs an der An-/Abtriebsseite dieses Gruppengetriebes (16) enthält.

6. Getriebeaufbau nach einem der vorhergehenden Ansprüche, dadurch gekennzeichnet, daß er antriebsseitig eine Umschalteinrichtung (12) mit auskuppelbarem Umlaufgetriebe (13) enthält.

7. Getriebeaufbau nach einem der Ansprüche 4 bis 5, dadurch gekennzeichnet, daß er aus einer Bremse F'5 besteht, die mit dem Zentralrad (38) des Getriebes C (23) so verbunden ist, daß man bei Betätigung der Bremse F'5 an der Abtriebsseite (18) des Getriebeaufbaus mindestens einen Rückwärtsgang erhält.

8. Getriebeaufbau nach einem der Ansprüche 4 bis 5, dadurch gekennzeichnet, daß das Zentralrad (54) des Getriebes F (15) drehend mit einer Bremse F1 (74), der Planetenradträger (56) des Getriebes F (15) drehend mit dem Antriebsteil (10) des Getriebeaufbaus und der Zahnkranz (58) des Getriebes F (15) drehend mit drei Kupplungen E'1 (80), E'2 (82) und E'3 (84) verbunden ist, die jeweils mit dem Antriebsteil (10) des Getriebeaufbaus, dem Zentralrad (26) des Getriebes C bzw. mit dem Zentralrad (20) des Getriebes A verbunden sind.

9. Getriebeaufbau nach einem der vorhergehenden Ansprüche, dadurch gekennzeichnet, daß das Antriebsteil hauptsächlich in Form einer Welle (10) ausgeführt ist, die durch diesen Getriebeaufbau verläuft und koaxial zu den Umlaufgetrieben (13, 15, 17, 19, 21, 23) angebracht ist.

**Claims**

1. Gearbox drive line comprising a group (16) of four epicyclic trains (17, 19, 21, 23) with identical train ratios K and combined in such a way as to obtain at least three input/output gear ratios of the group (16) which are essentially spaced in a geometric progression, characterized in that the ratio K of the four epicyclic trains (17, 19, 21, 23) is chosen to be a value that approximates to the real solution of the equation $K^3-(1+K)^2=0$, i.e. to be a value approximating to 2.148, the drive line comprising, upstream of the said group (16), a step-up gearset (14, 14') with a declutchable epicyclic train F (15) which has a step-up coefficient CS approximating to $\sqrt{K}$, the said step-up gearset (14, 14') being combined with the said group (16) in such a way as to obtain six or eight input/output gear ratios essentially spaced in a geometric progression of spacing $\sqrt{K}$, i.e. a spacing of a value approximating to 1.466.

2. Drive line according to Claim 1, characterized in that the four trains (17, 19, 21, 23) of the said group (16) have identical modules corresponding to a value approximating to 2.148 for the train ratios, the said modules being, in particular, chosen to be 90/42 or 82/38.

3. Drive line according to either of Claims 1 and 2, characterized in that the five epicyclic trains (15, 17, 19, 21, 23) of the group (16) and of the step-up gearset (14, 14') have identical train ratios and identical modules.

4. Drive line according to one of the preceding claims, characterized in that the said group comprises an input train B (19), an output train C (23), and two intermediate trains A (17) and D (19), the input element (44) of the group (16) being connected in rotation with the sun gear (26) of the input train B, the output element (18) of the group (16) being connected in rotation with the planet carrier (40) of the output train C, the sun gear (38) of the train C being connected in rotation with the sun gear (32) of the train D, the planet carrier (28) of the train B and the annulus gear (24) of the train A, the braked annulus gear (42) of the train C being connected in rotation with the planet carrier (34) of the train D, the annulus gear (30) of the train B and the planet carrier (22) of the train A, the sun gear (20) of the train A and the annulus gear (36) of the train D being individually braked.

5. Drive line according to Claim 4, characterized in that it comprises at least one clutch (52, 82-84) between the sun gear (20) of the train A and the sun gear (26) of the train B so as to obtain direct input/output engagement of the said group (16).

6. Drive line according to one of the preceding claims, characterized in that it comprises, at input, a reversing gearset (12) with declutchable epicyclic train (13).

7. Drive line according to either of Claims 4 and 5, characterized in that it comprises a brake F'5 associated with the sun gear (38) of the train C (23) so as to obtain at least one reverse gear at output (18) from the drive line when the brake F'5 is activated.

8. Drive line according to either of Claims 4 and 5, characterized in that the sun gear (54) of the train F (15) is connected in rotation with a brake F1 (74), the planet carrier (56) of the train F (15) is connected in rotation with the input member (10) of the drive line and the annulus gear (58) of the train F (15) is connected in rotation with three clutches E'1 (80), E'2 (82) and E'3 (84) associated respectively with the input member (10) of the drive line, with the sun gear (26) of the train C, and with the sun gear (20) of the train A.

9. Drive line according to one of the preceding claims, characterized in that the input member is mainly in the form of a shaft (10) passing through the said drive line mounted coaxially with respect to the said epicyclic trains (13, 15, 17, 19, 21, 23).

FIG.1

EP 0 832 377 B1

FIG_2

EP 0 832 377 B1